# EUROPÄISCHE PATENTANMELDUNG

(11) **EP 0 874 512 A2**
(43) Veröffentlichungstag der Anmeldung: **28.10.1998**
(21) Anmeldenummer: 98106885.1
(22) Anmeldetag: 16.04.1998
(51) Int. Cl.: H04M 9/02

(54) **Türsprechanlage**

(30) Priorität: 21.04.1997 DE 19716579
(71) Anmelder: Ritto - Werk Loh GmbH & Co. KG, D-35708 Haiger (DE)
(72) Erfinder: Achenbach, Heinz, 35236 Breidenbach (DE); Braun, Wilfried, 6344 Dietzhölztal-Ewersbach (DE); Heinbach, Hartmut, 57080 Siegen (DE); Heppner, Manfred, 35708 Haiger (DE)
(74) Vertreter: Fleck, Hermann-Josef, Dr.-Ing.

(57) **Zusammenfassung**

Die Erfindung betrifft eine Türsprechanlage mit mehreren Wohnungstelefonen, mindestens einer Türstation und einem Netzgerät zur Stromversorgung für die Wohnungstelefone und die Türstationen, bei der für den Sprechverkehr mindestens eine Zweidrahtleitung vorgesehen ist, die von den Türstationen zu allen Wohnungstelefonen geführt ist. An die Zweidrahtleitung der Türsprechanlage sind eine Notrufstelle und Notrufeinrichtungen mit eigener Stromversorgung wechselstrommäßig gekoppelt, um eine zusätzliche Notruffunktion durchführen zu können. Dabei werden über die Türsprechanlagen-Verkabelung Notrufadressen übertragen, mit denen die Notrufeinrichtungen einzeln und/oder in Gruppen und/oder zusammen angesteuert werden können.

## Beschreibung

Die Erfindung betrifft eine Türsprechanlage mit mehreren Wohnungstelefonen, mindestens einer Türstation und einem Netzgerät zur Stromversorgung für die Wohnungstelefone und die Türstationen, bei der für den Sprechverkehr mindestens eine Zweidrahtleitung vorgesehen ist, die von den Türstationen zu allen Wohnungstelefonen geführt ist.

Die bekannten Türsprechanlagen dieser Art dienen für den Sprechverkehr zwischen einer Türstation und den Wohnungstelefonen. Dabei geht dem Sprechverkehr ein durch Betätigen einer Ruftaste ausgelöster Anruf zu dem erwünschten Wohnungstelefon voraus. Mit dem Melden des gerufenen Wohnungstelefons wird die Sprechverbindung hergestellt und sichergestellt, daß die nicht gerufenen Wohnungstelefone über sogenannte Mithörsperren von der Sprechverbindung ferngehalten werden.

Es ist Aufgabe der Erfindung, bei einer Türsprechanlage der eingangs erwähnten Art das vorhandene Leitungsnetz für eine zusätzliche Notruffunktion zu verwenden.

Diese Aufgabe wird nach der Erfindung dadurch gelöst, daß zumindest einem Teil der Wohnungstelefone eine Notrufeinrichtung mit eigener Stromversorgung zugeordnet ist, die wechselstrommäßig mit der Zweidrahtleitung gekoppelt ist, daß von einer Notrufstelle aus mittels Notruftasten die Einspeisung von Einzel-Notrufadressen und/oder Gruppen-Notrufadressen und/oder einer Sammel-Notrufadresse auf die Zweidrahtleitung sowie die Anschaltung einer Notrufsprecheinrichtung an die Zweidrahtleitung einleitbar und ausführbar ist und daß die Notrufeinrichrtungen auf die vorgegebene Einzel-Notrufadresse und/oder vorgegebene Gruppen-Notrufadressen und/oder die Sammel-Notrufadresse ansprechen, Notrufsignale auslösen und eine Sprachwiedergabeeinrichtung der Notrufeinrichtung mit der Zweidrahtleitung verbinden.

Die Notrufstelle kann dabei einem Wohnungstelefon, z.B. dem des Hausmeisters oder dgl., zugeordnet werden. Mit den Notrufadressen können die Wohnungstelefone für individuelle Notrufe, für Gruppen von Wohnungstelefone, z.B. einer Etage, für Gruppen-Notrufe oder für alle Wohnungstelefone als Sammel-Notruf verwendet werden, wobei im letzten Fall allen Wohnungstelefonen eine Notrufeinrichtung zugeordnet ist. Die Notrufeinrichtungen können individuell programmiert und auf die gewünschte Notrufart eingestellt werden, indem sie auf die entsprechenden Notrufadressen ansprechen.

Die Zuordnung einer eigenen Stromversorgung für die Notrufeinrichtungen stellt sicher, daß selbst bei großen Leitungslängen und einem Sammel-Notruf alle Notrufeinrichtungen ausreichend mit Spannung bzw. Strom versorgt werden. Außerdem wird die Stromversorgung der Türsprechanlage mit der zentralen Stromversorgung davon nicht beeinträchtigt. Die Notrufeinrichtungen und die Notrufstelle sind nur wechselstrommäßig mit der für die Notruffunktion verwendeten Zweidrahtleitung verbunden.

Nach einer Ausgestaltung ist vorgesehen, daß die Notrufeinrichtungen einen Empfangs-Mikrorechner aufweisen, in dem die Einzel-Notrufadresse und/oder die Gruppen-Notrufadressen und/oder die Sammel-Notrufadresse gespeichert sind, bei deren Auftreten auf der Zweidrahtleitung die Auslösung des Notrufsignals und die Anschaltung der Sprachwiedergabeeinrichtung erfolgt. Mit dem Empfangs-Mikrorechner lassen sich auch mehrere Notrufadresen speichern, so daß Einzel-Notruf, mehrere Gruppen-Notrufe und der Sammel-Notruf vorgegeben werden können, über die die Notrufverbindungen hergestellt werden können. Die Übertragung der Notrufadressen erfolgt nach einer bevorzugten Ausgestaltung dadurch, daß die Notrufadressen mit Frequenzumtastung als modulierte Binär-Codezeichen im Sprachfrequenzbereich übertragen werden.

Eine Sprechverbindung von der Notrufstelle zu den über die Notrufadressen ausgewählten Notrufeinrichtungen, d.h. auch Wohnungstelefonen, läßt sich dadurch herstellen, daß die Notruf-Sprecheinrichtung der Notrufstelle als Notrufmikrophon mit nachgeschaltetem Sprechverstärker und die Sprachwiedergabeeinrichtung der Notrufeinrichtungen als Lautsprecher ausgebildet sind.

Für die Aussendung der Notrufadressen ist nach einer Ausgestaltung vorgesehen, daß die Notruftasten individuellen Notrufadressen zugeordnet sind, die in einem Sende-Mikrorechner gespeichert sind und daß beim Ansteuern des Sende-Mikrorechners über eine Notruftaste die zugeordnete Notrufadresse zur Aussendung gelangt, und daß der Sende-Mikrorechner über eine Notrufanschaltung wechselstrommäßig mit der Zweidrahtleitung gekoppelt ist.

Die zusätzliche Notruffunktion läßt sich besonders einfach realisieren, wenn die Türsprechanlage eine als Busleitung verwendete Zweidrahtleitung aufweist, über die von Ruftasten auslösbare Rufsignale als Codesignale übertragen werden.

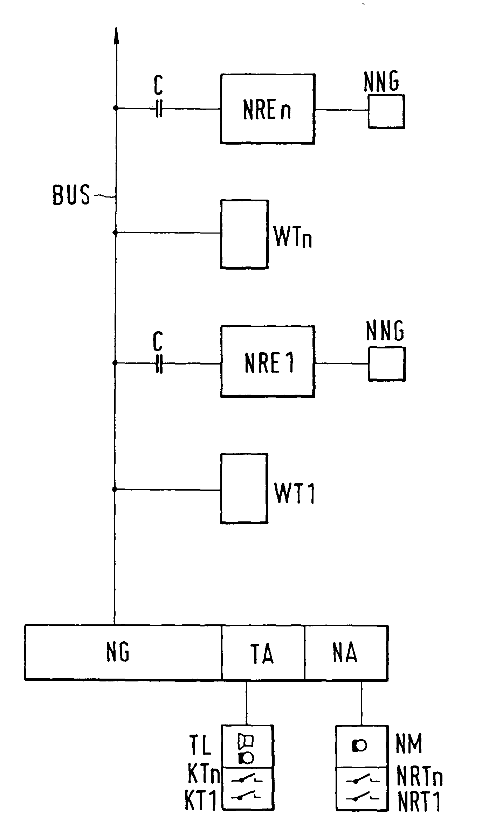

Die Erfindung wird anhand eines in der Zeichnung als Blockschaltbild dargestellten Ausführungsbeispiels näher erläutert.

Die Türsprechanlage umfaßt eine größere Anzahl von Wohnungstelefonen WT1 bis WTn, die auf mehrere Etagen eines Wohngebäudes verteilt sein können. Eine Busleitung BUS ist als Zweidrahtleitung zu allen Wohnungstelefonen WT1 bis WTn geführt. Ein Netzgerät NG ist an die Busleitung BUS angeschaltet und übernimmt die Stromversorgung für die gesamte Türsprechanlage. Der Betrieb der Türsprechanlage bleibt für eine zusätzliche Notruffunktion unbeeinträchtigt, da Notrufeinrichtungen NRE1 bis NREn mit eigenen Netzgeräten NNG nur wechselstrommäßig über Koppelkondensatoren C mit der Busleitung BUS verbunden sind.

Die Rufsignale der Türsprechanlage werden über Ruftasten, Klingeltasten KT1 bis KTn oder dgl. ausgelöst. Über eine Tastenanschaltung TA gelangen die Rufsignale auf die Busleitung BUS und darüber zu allen Wohnungstelefonen WT1 bis WTn. Auf das Rufsignal spricht aber nur das dem Rufsignal zugeordnete Wohnungstelefon an, während die nicht betroffenen Wohnungstelefone am Ansprechen und damit Aufschalten auf eine von dem gerufenen Wohnungstelefon hergestellte Sprechverbindung gehindert sind. Dazu sind an sich bekannte Mithörsperren in den Wohnungstelefonen WT1 bis WTn vorgesehen. Der Sprechverkehr der Türsprechanlage kann im Gegensprech- oder Wechselsprechverkehr durchgeführt werden. An der Türstation ist dazu zumindest ein Türlautsprecher TL erforderlich, der in beiden Sprechrichtungen ausnützbar ist.

Über eine Notrufanschaltung NA wird eine Notrufstelle mit Notruftasten NRT1 bis NRTn und ein Notrufmikrophon NM wechselstrommäßig mit der Busleitung BUS gekopppelt.

Mit den Notruftasten NRT1 bis NRTn wird ein Sende-Mikrorechner der Notrufstelle angesteuert, der daraufhin zugeordnete Notrufadressen über die Notrufanschaltung NA auf die Busleitung BUS gibt. Die Notrufadressen gelangen zu allen Notrufeinrichtungen NRE1 bis NRE2 und werden dort einem Empfangs-Mikrorechner zugeführt, in dem die Notrufadressen gespeichert sind, bei deren Übertragung die Notrufeinrichtung NRE1 bzw. NRE2 ansprechen soll, ihre Sprachwiedergabeeinrichtung anschaltet und z.B. ein akustisches Notrufsignal auslöst.

Die Notrufadressen lassen sich in Einzel-Notrufadressen, Gruppen-Notrufadressen und eine Sammel-Notrufadresse einteilen, so daß die z.B. allen Wohnungstelefonen WT1 bis WTn zugeordneten Notrufeinrichtungen einzeln, in Gruppen und zusammen im Sammel-Notruf gesteuert werden können. Dabei kann die Gruppenbildung auch mehrere, unterschiedlich zusammengesetzte Gruppen umfassen, die durch unterschiedliche Gruppen-Notrufadressen gekennzeichnet sind.

Die Notrufstelle mit der Notrufanschaltung NA, dem Notruf-Mikrophon NM mit nachgeschaltetem Sprechverstärker und der Tasteneinheit mit den Notruftasten NRT1 bis NRTn kann einem bestimmten Wohnungstelefon, z.B. dem des Hausmeisters, zugeordnet werden. Da die Notrufstelle nur wechselstrommäßig mit der Busleitung BUS gekoppelt ist, kann sie auch von der Türsprechanlage örtlich getrennt angeordnet und nur über eine Verbindungsleitung mit dieser gekoppelt sein und von einer externen Stelle aus gesteuert werden.

Für die Bildung der Notrufadressen werden mit Frequenzumtastung modulierte Binär-Codezeichen verwendet, die im Sprachfrequenzbereich über die Busleitung BUS übertragen werden können. Dazu reicht die wechselstrommäßige Kopplung der Notrufstelle und der Notrufeinrichtungen NRE1 bis NREn mit der Busleitung BUS aus.

Selbstverständlich läßt sich die Notruffunktion über die Türsprechanlage auch mit Notrufeinrichtungen realisieren, die nur einem Teil der Wohnungstelefone WT1 bis WTn zugeordnet sind.

Da in Notsituationen die Netz-Wechselspannung ausfallen kann, sieht eine Weiterbildung der Erfindung vor, daß die Stromversorgung der Notrufeinrichtungen und der Notrufstelle mit einer Notstromversorgung versehen sind.

Die Notstromversorgung ist dabei unabhängig von der Netz-Wechselspannung und mit einer Spannungsüberwachungseinrichtung versehen. Sie kann z.B. einen wiederaufladbaren Akkumulator aufweisen. Beim Erreichen einer vorgegebenen Mindest-Versorgungsspannung spricht die Spannungsüberwachungseinrichtung an und löst über die Sprachwiedergabeeinrichtung der Notrufeinrichtung der Notrufstelle ein akustisches Signal und an der Notrufeinrichtung wird mit einem optischen Signal das Abfallen der Notstromversorgung unter die Mindest-Versorgungsspannung angezeigt.

## Patentansprüche

1. Türsprechanlage mit mehreren Wohnungstelefonen, mindestens einer Türstation und einem Netzgerät zur Stromversorgung für die Wohnungstelefone und die Türstationen, bei der für den Sprechverkehr mindestens eine Zweidrahtleitung vorgesehen ist, die von den Türstationen zu allen Wohnungstelefonen geführt ist,
dadurch gekennzeichnet,
daß zumindest einem Teil der Wohnungstelefone (WT1, WTn) eine Notrufeinrichtung (NRE1, NREn) mit eigener Stromversorgung (NNG) zugeordnet ist, die wechselstrommäßig mit der Zweidrahtleitung (BUS) gekoppelt ist,
daß von einer Notrufstelle aus mittels Notruftasten (NRT1, NRTn) die Einspeisung von Einzel-Notrufadressen und/oder Gruppen-Notrufadressen und/oder einer Sammel-Notrufadresse auf die Zweidrahtleitung (BUS) sowie die Anschaltung einer Notrufsprecheinrichtung an die Zweidrahtleitung (BUS) einleitbar und ausführbar ist und
daß die Notrufeinrichtungen (NRE1, NREn) auf die vorgegebene Einzel-Notrufadresse und/oder vorgegebene Gruppen-Notrufadressen und/oder die Sammel-Notrufadresse ansprechen, Notrufsignale auslösen und eine Sprachwiedergabeeinrichtung der Notrufeinrichtung (NRE1, NREn) mit der Zweidrahtleitung (BUS) verbinden.

2. Türsprechanlage nach Anspruch 1,
dadurch gekennzeichnet,
daß die Notrufeinrichtungen (NRE1, NREn) einen Empfangs-Mikrorechner aufweisen, in dem die Einzel-Notrufadresse und/oder die Gruppen-Notrufadressen und/oder die Sammel-Notrufadresse gespeichert sind, bei deren Auftreten auf der Zweidrahtleitung (BUS) die Auslösung des Notrufsignals und die Anschaltung der Sprachwiedergabeeinrichtung erfolgt.

3. Türsprechanlage nach Anspruch 1 oder 2,
dadurch gekennzeichnet,
daß die Notrufadressen mit Frequenzumtastung als modulierte Binär-Codezeichen im Sprachfrequenzbereich übertragen werden.

4. Türsprechanlage nach einem der Ansprüche 1 bis 3,
dadurch gekennzeichnet,
daß die Notruf-Sprecheinrichtung der Notrufstelle als Notrufmikrophon (NM) mit nachgeschaltetem Sprechverstärker und die Sprachwiedergabeeinrichtung der Notrufeinrichtungen (NRE1, NREn) als Lautsprecher ausgebildet sind.

5. Türsprechanlage nach einem der Ansprüche 1 bis 4,
dadurch gekennzeichnet,
daß die Notruftasten (NRT1, NRTn) individuellen Notrufadressen zugeordnet sind, die in einem Sende-Mikrorechner gespeichert sind und
daß beim Ansteuern des Sende-Mikrorechners über eine Notruftaste (NRT1, NRT2) die zugeordnete Notrufadresse zur Aussendung gelangt.

6. Türsprechanlage nach Anspruch 5,
dadurch gekennzeichnet,
daß der Sende-Mikrorechner über eine Notrufanschaltung (NA) wechselstrommäßig mit der Zweidrahtleitung (BUS) gekoppelt ist.

7. Türsprechanlage nach einem der Ansprüche 1 bis 6,
dadurch gekennzeichnet,
daß die Zweidrahtleitung (BUS) als Busleitung ausgebildet ist, über die von Ruftasten auslösbare Rufsignale als Codesignale übertragbar sind.

8. Türsprechanlage nach einem der Ansprüche 1 bis 7,
dadurch gekennzeichnet,
daß die Stromversorgung (NNG) der Notrufeinrichtungen (NRE1, NREn) und der Notrufstelle mit einer Notstromversorgung versehen sind.

9. Türsprechanlage nach Anspruch 8,
dadurch gekennzeichnet,
daß die Notstromversorgung unabhängig von der Netz-Wechselspannung und mit einer Spannungsüberwachungseinrichtung versehen ist.

10. Türsprechanlage nach Anspruch 9,
dadurch gekennzeichnet,
daß die Spannungsüberwachungseinrichtung bei Erreichen einer Mindest-Versorgungsspannung über die Sprachwiedergabeeinrichtung der Notrufeinrichtung (NRE1, NREn) oder der Notrufstelle ein akustisches Signal und an der Notrufeinrichtung (NRE1, NREn) oder Nutrufstelle ein das Erreichen der Mindest-Versorgungsspannung in der Notstromversorgung kennzeichnendes optisches Signal auslöst.
